# EUROPEAN PATENT APPLICATION

(11) **EP 2 003 844 A1**
(43) Date of publication of application: **17.12.2008**
(21) Application number: 07301107.4
(22) Date of filing: 13.06.2007
(51) Int. Cl.: H04L 29/06, H04N 7/24

(54) **System and method for transport of a constant bit rate stream**

(71) Applicant: Thomson Licensing, 92100 Boulogne-Billancourt (FR)
(72) Inventor: Lemonnier, Philippe, 35850 Geveze (FR); Champel, Mary-Luc, 35220 Marpiré (FR)
(74) Representative: Ruellan-Lemonnier, Brigitte

(57) **Abstract**

The present invention concerns a transmitter and a receiver and a method thereof for permitting a receiver to reconstruct a stream at a constant bit rate. In particular it concerns a method for transmitting first packets encapsulated in second packets in a transmission system, comprising the steps, at the transmitter, of collecting a predetermined number of the first packets, and triggering transmission of the second packet encapsulating the collected first packets, the second packet comprising a timestamp for each one of the first packets.

## Description

The present invention relates generally to the transport of variable bit rate stream, and in particular to the time accurate Transport of VBR MPEG-2 TS over the Internet Protocol.

This section is intended to introduce the reader to various aspects of art, which may be related to various aspects of the present invention that are described and/or claimed below. This discussion is believed to be helpful in providing the reader with background information to facilitate a better understanding of the various aspects of the present invention. Accordingly, it should be understood that these statements are to be read in this light, and not as admissions of prior art.

The MPEG-2 specification [1] and [2] describes how timestamps are included inside an MPEG-2 stream, how at the destination the different timestamps are used to recover a clock in synchronism with the clock at the source side, and how the different timestamps are used to feed the MPEG decoder and to control when to display the elements of the transmitted stream.
The document IETF RFC 2250 [4] describes how several MPEG-2 transport stream, MPEG-2 TS, and program stream, MPEG-2 PS, packets are to be carried inside the payload of an RTP packet, and also specifies that a single timestamp is attached to each RTP packet. The DVB-IP specification [5] describes a generic architecture for distribution of multimedia services over IP networks. This specification adopts RFC 2250 as the mechanism for transporting MPEG-2 streams over RTP.
The grouped MPEG-2 TS packets suffer from jitter, i.e. the variation of transmission delay, across the IP transmission network. The jitter is due to the encapsulation scheme according to RFC 2250; at the sender, MPEG-2 TS packets are grouped together and therefore lose their relative position in time. The transmission network also brings jitter. The jitter does not permit the receiver to easily reproduce accurately the original time interval between MPEG-2 TS packets. Since several MPEG-2 packets are carried inside a single RTP packet, some assumptions are needed if the timing of all MPEG-2 packets is to be truly reconstructed at the destination side. Usually it is assumed that the entire MPEG-2 stream is a constant bit rate stream. This is not necessarily true, and especially, but not only, when only a partial MPEG-2 TS is carried; e.g. a stream that initially was a constant bit rate stream but in which an amount of packets have been deleted. Moreover, if a number of MPEG-2 packets are carried inside an RTP packet, the RTP timestamp is created at the time that the RTP packet's construction is finalized, i.e. at the time the last MPEG-2 packet arrives at the sender. At the destination side, this means that only this last packet's time is known; the time of all other MPEG-2 packets can only be estimated. The reconstructed timing of the packets includes a jitter that is given by the uncertainty of the time when the MPEG-2 packet was put inside the RTP buffer. This jitter is equal to the time difference of the transmission of two succeeding RTP packets, i.e. to the difference of their time stamps. The MPEG-2 clock recovery extracts from this 'jittered' stream the PCR or SCR timestamps, feeds them to a PLL to reconstruct the MPEG clock. The supplementary jitter introduced by the RTP transmission makes that this PLL needs to be more efficient than in the case of an MPEG stream transmitted directly without RTP. It also leads to a longer time before the clock is synchronized.

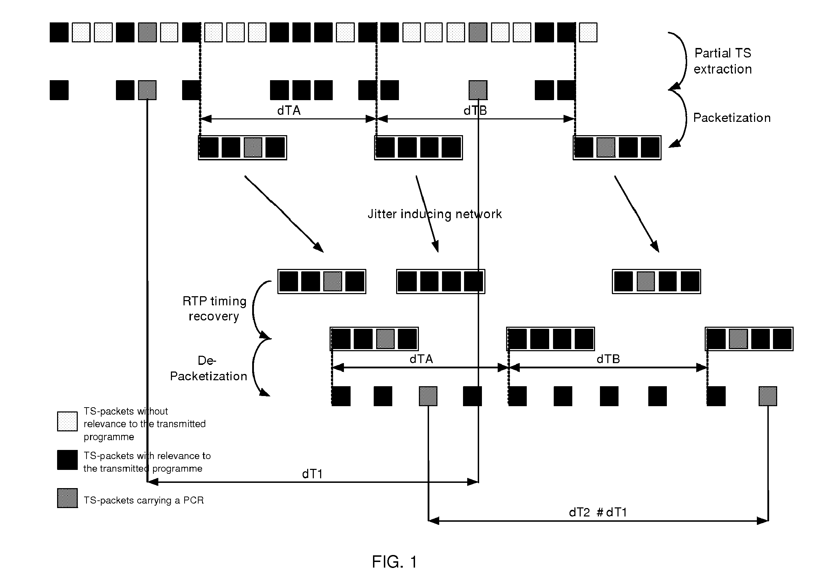

The figure 1 represents the MPEG-2 TS transport according to the RFC 2250. The first line in Figure 1 represents a Constant Bit Rate MPEG-2 TS in which some packets are identified as packets carrying PCR information, packets carrying only Audio-Video information or simply packets that do not belong to the service considered.
The second line represents the Variable Bit Rate MPEG-2 TS obtained once the packets that do not concern the specific service that will be transported have been removed from the stream.

The third line represents the RTP stream that transports the MPEG-2 TS according to the RFC 2250. Here, four MPEG-2 TS packets are encapsulated in the payload of each RTP packet.
The fourth line represents what happens at the receiver's side once the RTP packets have been transported over an IP network and have consequently suffered some jitter. The original timing between RTP packets, noted dTA and dTB, has been lost.
The fifth line represents what happens when the timing recovery of RTP is used. Indeed, after RTP timing recovery, it is possible to reproduce almost exactly the same stream as in the third line since the time interval between RTP packets can be reproduced with a precision of 11µs. RTP timestamps are based on a 90kHz clock.
The last line represents what happens when TS packets are extracted from the RTP packets payload. The time interval between TS packets has been lost during the process. Usually, the receiver produces an extracted stream in which packets are regularly spaced, as indicated in the last line.
The inaccurate reproduction of the original time interval between MPEG-2 TS packets may be an issue, because some applications need to be able to reproduce the original time sequencing of packets at the receivers. Some packets carry some timing information such as the Program Clock References, the PCR, and it is very important to make sure that those PCRs do not suffer from too much jitter. For other applications, it is important to be able to precisely indicate the position of each packet. The time interval between packets may actually be used for insertion of packets for other services.

The present invention attempts to remedy at least some of the concerns connected with RFC2250 in the prior art, by providing a method allowing an accurate transport of MPEG-2 TS over the Internet Protocol.
The present invention concerns a method for transmitting first packets encapsulated in second packets in a transmission system, comprising the steps, at the transmitter, of collecting a predetermined number of the first packets, and triggering transmission of the second packet encapsulating the collected first packets, the second packet comprising a timestamp for each one of the first packets.

According to an embodiment, the method comprises the step of identifying non relevant first packets, removing non relevant first packets, and indicating in the second packet the position of the non relevant first packets.

According to an embodiment, the method comprises the step of not indicating a timestamp for the non relevant packet.

According to an embodiment, the first packets are MPEG 2 Transport Stream packets.

According to an embodiment, the second packets are RTP packets.

According to an embodiment, the non relevant packets are NULL TS packets.

Another object of the invention is a method for receiving a stream of first packets encapsulated in a second packet in a transmission system, characterized by the steps, at the receiver, of identifying the presence of timestamps for the first packets in the second packet;, nd/or identifying the indication of the presence of a non relevant packet and building a stream with the first packets with a time interval between the first packets being set according to the timestamp and/or the identification of a non relevant packet.

Another object of the invention is a computer program product comprising program code instructions for executing the steps of the process according to the invention, when that program is executed on a computer. By "computer program product", it is meant a computer program support, which may consist not only in a storing space containing the program, such as a diskette or a cassette, but also in a signal, such as an electrical or optical signal.

Certain aspects commensurate in scope with the disclosed embodiments are set forth below. It should be understood that these aspects are presented merely to provide the reader with a brief summary of certain forms the invention might take and that these aspects are not intended to limit the scope of the invention. Indeed, the invention may encompass a variety of aspects that may not be set forth below.

The invention will be better understood and illustrated by means of the following embodiment and execution examples, in no way limitative, with reference to the appended figures on which:
- Figure 1 is a diagram illustrating the jitter problem resulting from the encapsulation of MPEG 2 TS packets.

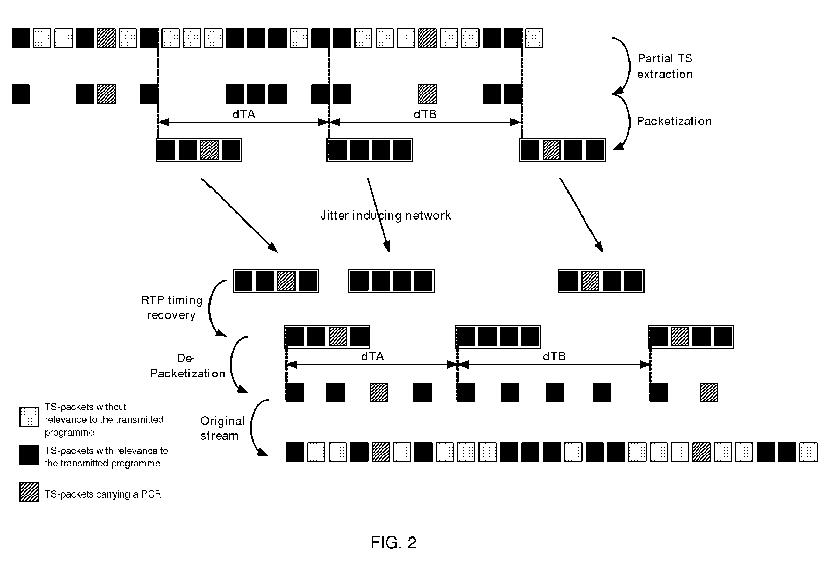

- Figure 2 is a diagram illustrating the original stream reconstruction according to the embodiment;
- Figure 3 is a RTP packet according to the first embodiment;
- Figure 4 is a RTP packet according to the second embodiment;
- Figure 5 is a RTP packet according to the third embodiment;
- Figure 6 is a block diagram of a transmitter according to the present embodiment; and
- Figure 7 is a block diagram of a receiver according to the present embodiment.

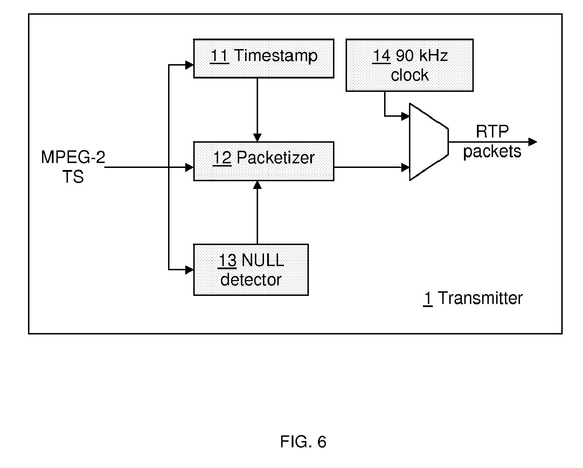

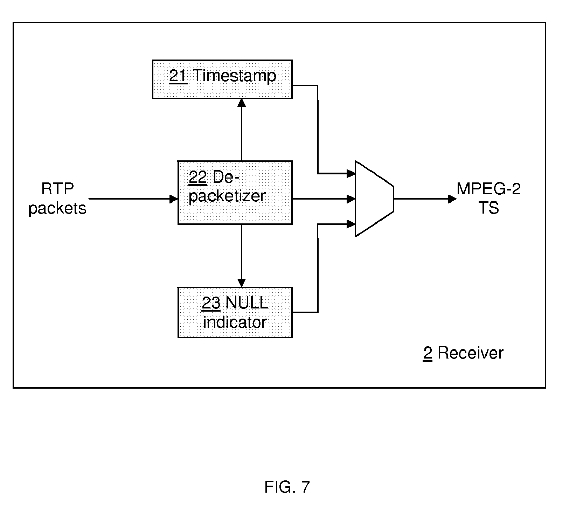

In Figures 6 and 7, the represented blocks are purely functional entities, which do not necessarily correspond to physically separate entities. Namely, they could be developed in the form of software, or be implemented in one or several integrated circuits.

The exemplary embodiment comes within the framework of a transmission of an MPEG-2 TS over IP, but the invention is not limited to this particular environment and may be applied within other frameworks where transmission generates jitter.

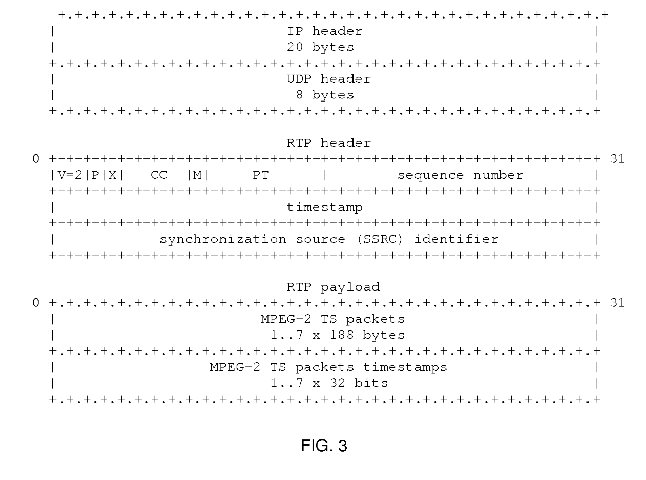

According to a first embodiment, the emitter adds one timestamp for each TS packet in the RTP payload, as indicated in figure 3. Since, according to RFC 2250, there can be 1 to 7 TS packets per RTP packet, an equivalent number of timestamp indications, 1 to 7, is added after the TS packets at the end of the RTP payload. Timestamp information is based on a 27MHz clock, which is the same clock as the MPEG-2 TS. 32 bits are used for one timestamp, and with the resolution of a 27MHz clock, 32 bits still provide a time window of 159 seconds. 159 seconds correspond to 2^32 / 27E6.

Timestamps allow each TS packet to be placed precisely in time upon reception. This allows the receiver to reproduce accurately the time interval between consecutive TS packets. Of course, the first timestamp corresponds to the first TS packet in the payload, the second timestamp corresponds to the second TS packet in the payload, and so on.

In the RTP packet, almost all fields are filled according to the RFC 2250. A first difference is that following the last TS packet in the payload, the emitter introduces timestamps. Another difference is that the value put into the length field in the RTP header is larger. It includes the length of the TS packets timestamps too.

At the receiver's side, the presence of the timestamps is detected at the IP length field. Once the presence of the timestamps is detected, the receiver uses those timestamps to reproduce a VBR MPEG-2 TS in which the packets are spaced, according to their timestamp information. And that reproduces of course, the original VBR stream.

The following table indicates the values of the IP length field according to the first embodiment, IP length (ts mode). The TS is the transport stream, and the ts is the timestamp. In the first column, the IP length of the RTP for the transport of 1 TS is 228 bits. The IP length of the RTP for the transport of 1 TS and 1 ts is 232. When the receiver reads an IP length of 232, it then detects the presence of one timestamp.

| | | | | | | | |
|---|---|---|---|---|---|---|---|
| IP length (legacy) | 228 | 416 | 604 | 792 | 980 | 1168 | *1356* |
| Identification | 1 TS | 2 TS | 3 TS | 4 TS | 5 TS | 6 TS | *7 TS* |
| IP length (ts mode) | 232 | 424 | 616 | 808 | 1000 | 1192 | *1384* |
| *Identification* | *1 TS + 1ts* | *2 TS + 2ts* | *3 TS + 3 ts* | *4 TS + 4 ts* | *5 TS + 5 ts* | *6 TS + 6 ts* | *7 TS + 7 ts* |

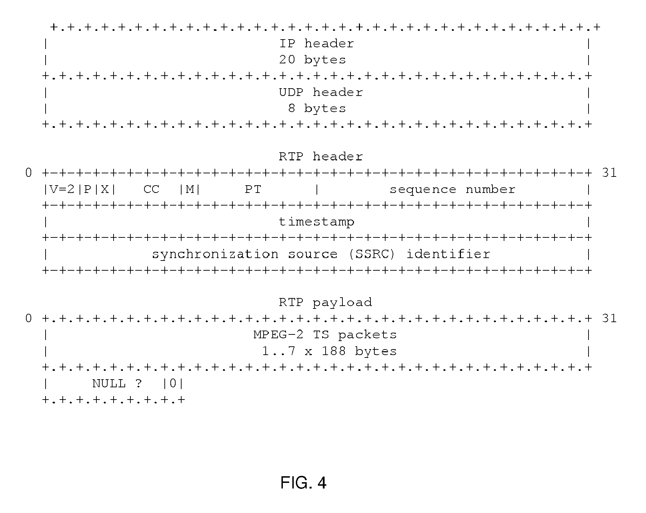

According to a second embodiment, the emitter adds an indication on the presence of a NULL packet in the stream.
Many VBR MPEG-2 TS are created by removing non relevant packets from a CBR stream. More specifically VBR MPEG-2 TS are created if NULL TS packets are removed from a CBR stream. This is typically the kind of stream that most MPEG-2 VBR encoders produce. In such a case, a receiver does not have to know the time interval between TS packets. Only knowing how many NULL packets were sitting between TS packets is enough to reproduce the original stream. Therefore, one byte is added at the end of the RTP payload, as indicated in figure 4. The 7 most significant bits indicate whether or not a NULL packet is present; a bit set to 1 means that a NULL packet is present.
At the emitter, whenever a NULL packet is detected the corresponding bit is set to 1 and the NULL packet is not put in the RTP payload. An example of an emitter is as follows; the emitter is set to build RTP packets with 7 TS packets. The emitter receives 7 TS packets. The first and the last packets comprise AV content, they are non NULL packets. The other packets are 5 NULL packets. The emitter builds a RTP packet whose payload contains only the 2 TS packets with AV content followed by the following byte 0x01111100.
According to the second embodiment, the NULL presence bit is set to 1 if and only if a NULL packet is detected. When the sender is configured to send 4 TS packets per RTP packet, the four least significant bits of the byte are therefore always be set to 0.
At the receiver's side, the transmitter configuration is detected with the IP length field. Once the presence of the extra byte is detected, the receiver produces a NULL packet whenever the presence of a NULL packet is signaled. The receiver produces packets at a rate that corresponds to the initial CBR. It knows this rate by looking at the number of packets sent between two consecutive PCRs.
The following table indicates the values of the IP length field according to the second embodiment (NULL mode). The TS is the transport stream, and the b is the bit corresponding to the identification of the NULL packet. In the first column, the IP length of the RTP for the transport of 1 TS is 228 bits. The IP length of the RTP for the transport of 1 TS and 1 b is 229.

| | | | | | | | |
|---|---|---|---|---|---|---|---|
| IP length (legacy) | 228 | 416 | 604 | 792 | 980 | 1168 | 1356 |
| Identification | 1 TS | 2 TS | 3 TS | 4 TS | 5 TS | 6 TS | 7 TS |
| IP length (NULL mode) | 229 | 417 | 605 | 793 | 981 | 1167 | 1357 |
| Identification | 1 TS+ 1b | 2 TS + 1b | 3 TS + 1b | 4 TS + 1b | 5 TS + 1b | 6 TS + 1b | 7 TS + 1b |

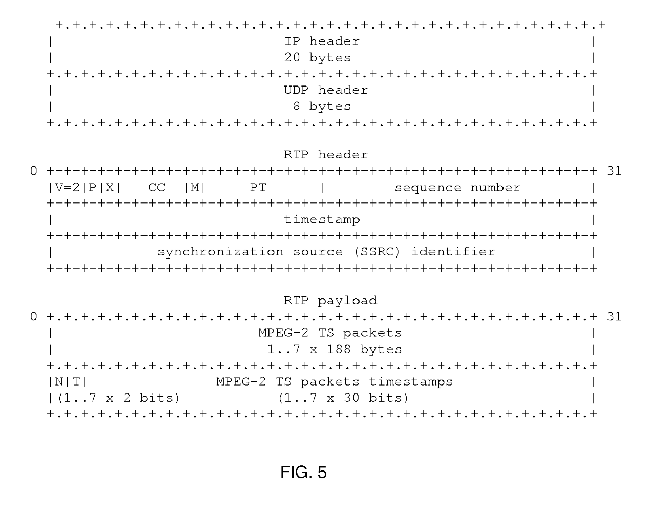

According to a third embodiment the emitter adds one timestamp for each TS packet, and an indication on the presence of a NULL packet in the stream, as indicated in figure 5. As for the first embodiment, the emitter adds one timestamp for each packet in the RTP payload. The number of timestamp is also up to 7. The timestamps are 30 bits long. This yields a window of about 40 seconds, which is enough for 7 consecutive TS packets.
The emitter also adds 2 bits before each one of the timestamp, the N and T bits. The N bit is set to 1 whenever a NULL packet presence needs to be marked. The T bit is set to 1 to inform that the next 30 bits represent a relevant timestamp.
The N bit has the same meaning as the bit of the second embodiment. It allows removing NULL packets from the TS, and still indicates their presence so that the receiver can reconstruct a CBR stream by reintroducing the NULL packets.
When the T bit is set to 0, the receiver is informed that whatever is stored in the next 30 bits, it is not a relevant timestamp. It shall not be used by the receiver to reconstruct the original stream.
When all the bits T are set to 0, only the presence of NULL packets can be used to reproduce the original stream.
When a T bit is set to 1, the receiver can use the timestamp to reproduce the original stream.
A receiver that does not know how to handle such timestamp information still has the possibility to use the NULL presence information, although it would probably lead to a weaker precision in some cases.

A transmitter 1 according to the embodiments is represented in figure 6. The NULL detector module 13 is adapted to detect the NULL packets, and more generally non relevant packets, in the stream. The timestamp module 11 is adapted to indicate the timestamp according to the MPEG-2 TS. The packetizer 12 builds the RTP packet according to the embodiments, with either the timestamp and/or the NULL information. The RTP packet is then generated, according to the RFC2250. The transmitter comprises a communication module, not represented, to connect to the receiver 2 through the Internet network, not represented.

A receiver 2 according to the embodiments is represented in figure 7. It comprises a de-packetizer 22 module adapted to receive the RTP packets. The timestamp module 21 extracts the timestamps from the RTP packets. The NULL detector reads the NULL packet indication in the RTP packets. The timestamp and the null indication are then used to build the original stream, as indicated hereinabove.

The embodiments are compliant with a legacy receiver device. A receiver device that conforms to RFC2250, but does not implement the embodiments, ignores the last bits or bytes of information embedded according to the embodiment.

References disclosed in the description, the claims and the drawings may be provided independently or in any appropriate combination. Features may, where appropriate, be implemented in hardware, software, or a combination of the two.
Reference herein to "one embodiment" or "an embodiment" means that a particular feature, structure, or characteristic described in connection with the embodiment can be included in at least one implementation of the invention. The appearances of the phrase "in one embodiment" in various places in the specification are not necessarily all referring to the same embodiment, nor are separate or alternative embodiments necessarily mutually exclusive of other embodiments.
Reference numerals appearing in the claims are by way of illustration only and shall have no limiting effect on the scope of the claims.

### References:

[1] ISO/IEC 13818-1:2000 Information technology -- Generic coding of moving pictures and associated audio information: Systems, International Standards Organization.
[2] ISO/IEC 13818-2:2000 Information technology -- Generic coding of moving pictures and associated audio information: Video, International Standards Organization.
[3] MPEG-4 Video: ITU-T Rec H.264 | ISO/IEC 14496-10 Information Technology - coding of audio-visual objects - Part 10: Visual
[4] IETF RFC 2250, RTP Payload Format for MPEG1/MPEG-2 Video, D. Hoffman et al., January 1998.
[5] DVB TM3022, Digital Video Broadcasting (DVB) - Transport of DVB Services over IP, ETSI, RTS/JTC-DVB-93, 2004-03-26

Further information regarding MPEG-2 Video and MPEG Systems can be found in the following documents: ISO/IEC 13818-1:2000 'Information Technology - Generic coding of moving pictures and associated audio information: Systems, ISO' and ISO/IEC 13818-2:2000 'Information Technology - Generic coding of moving pictures and associated audio information: Video, ISO'.

## Claims

1. Method for transmitting first packets encapsulated in second packets in a transmission system, **characterized by** the steps, at the transmitter, of:
- collecting a predetermined number of said first packets;
- triggering transmission of said second packet encapsulating said collected first packets, said second packet comprising a timestamp for each one of the first packets.

2. Method according to the claim 1, **characterized in that** it comprises the step of:
- identifying non relevant first packets;
- removing non relevant first packets; and
- indicating in said second packet the position of said non relevant first packets.

3. Method according to the claim 2, **characterized in that** it comprises the step of not indicating a timestamp for said non relevant packet.

4. Method according to any one of the preceding claims, **characterized in that** the first packets are MPEG-2 Transport Stream packets.

5. Method according to any one of the preceding claims, **characterized in that** the second packets are RTP packets.

6. Method according to any one of the preceding claims, **characterized in that** the non relevant packets are NULL TS packets.

7. Method for receiving a stream of first packets encapsulated in a second packet in a transmission system, **characterized by** the steps, at the receiver, of:
- identifying the presence of timestamps for said first packets in said second packet;
- and/or identifying the indication of the presence of a non relevant packet; and
- building a stream with said first packets with a time interval between said first packets being set according to the timestamp and/or the identification of a non relevant packet.

8. Computer program product, **characterized in that** it comprises program code instructions for executing the steps of the security process according to claim 1 when said program is executed on a computer.

9. Computer program product, **characterized in that** it comprises program code instructions for executing the steps of the security process according to claim 7 when said program is executed on a computer.
